# EUROPÄISCHE PATENTSCHRIFT

(11) **EP 3 860 883 B1**
(45) Veröffentlichungstag und Bekanntmachung des Hinweises auf die Patenterteilung: **23.04.2025**
(21) Anmeldenummer: 19794417.6
(22) Anmeldetag: 26.09.2019
(51) Int. Cl.: B60R 13/04

(54) **VERFAHREN ZUR POSITIONIERUNG EINER ZIERLEISTE UND KRAFTFAHRZEUGKOMPONENTE**
METHOD FOR POSITIONING A DECORATIVE STRIP, AND MOTOR VEHICLE COMPONENT
PROCÉDÉ DE POSITIONNEMENT D'UNE BAGUETTE DÉCORATIVE ET COMPOSANT DE VÉHICULE AUTOMOBILE

(30) Priorität: 05.10.2018 DE 102018124630
(43) Veröffentlichungstag der Anmeldung: 11.08.2021
(73) Patentinhaber: CQLT SaarGummi Technologies S.à.r.l., 5544 Remich (LU)
(72) Erfinder: GRÜTER, Achim, 66780 Rehlingen-Siersburg (DE); LAUX, Timo, 66809 Nalbach (DE); STAUB, Tobias, 66121 Saarbrücken (DE)
(74) Vertreter: Patentanwälte Bernhardt / Wolff Partnerschaft mbB
(86) Internationale Anmeldenummer: PCT/EP2019/000279
(87) Internationale Veröffentlichungsnummer: WO 2020/069767

(56) Entgegenhaltungen:
- CN-A- 106 740 549
- JP-A- 2016 147 520
- US-A1- 2007 278 827

## Beschreibung

Die Erfindung betrifft ein Verfahren zur Positionierung einer Zierleiste an einer Kraftfahrzeugkomponente nach dem Oberbegriff des Anspruchs 1 sowie eine derartige Fensterführung nach dem Oberbegriff des Anspruchs 5 und ein Endstück für eine Zierleiste nach dem Oberbegriff des Anspruchs 11.

Durch Benutzung ist bekannt, an einer Kraftfahrzeugkomponente, wie beispielsweise einer Fensterführung eines Kraftfahrzeugs, als Designmerkmal eine Zierleiste anzubringen. Die Zierleiste kann beispielsweise entlang des oberen Rahmens der Fensterrahmen von Vorder- und Hintertür verlaufen. Hierbei stellt sich jedoch oftmals das Problem, dass die Zierleisten am Übergang zwischen Vorder- und Hintertür nach der Türeinstellung nicht fluchten, wodurch dieses Designmerkmal beeinträchtigt wird.

Aus US 2007/278827 A1, JP 2016147520 A und CN 106740549 A sind Endkappen für Dichtungsprofile bekannt, welche an einem freien Ende der Dichtungsprofile befestigt werden. Anschließend werden die Dichtungsprofile mittels der Endkappen an einer Kraftfahrzeugtür befestigt.

Aufgabe der Erfindung ist es, ein Verfahren zu schaffen, welches eine einfache und genaue Positionierung einer Zierleiste an der Kraftfahrzeugkomponente ermöglicht.

Diese Aufgabe wird dadurch gelöst, dass in einem ersten Schritt die Zierleiste an der Kraftfahrzeugkomponente befestigt und anschließend ein Endstück an der Kraftfahrzeugkomponente und dem freien Ende der Zierleiste angebracht wird, so dass das Endstück das freie Ende der Zierleiste in eine gewünschte Soll-Position beaufschlagt, also drückt oder zieht. Hierdurch kann die Zierleiste im Bereich des freien Endes besonders einfach und genau beispielsweise in Bezug auf eine benachbarte Zierleiste für einen stufenlosen Übergang positioniert werden.

Erfindungsgemäß wird nach der Befestigung der Zierleiste und vor der Anbringung des Endstücks die Abweichung des freien Endes der Zierleiste von einer Soll-Position bestimmt. In Abhängigkeit von der ermittelten Abweichung wird anschließend das passende Endstück ausgewählt, welches einen derartig großen Versatz aufweist, dass die Abweichung ausgeglichen werden kann.

Bevorzugt kann dabei das Endstück zur Befestigung an der Zierleiste in das freie Ende der Zierleiste eingeschoben werden. Die Zierleiste kann hierzu im Querschnitt einen Hohlraum begrenzen, was beispielsweise bei einem C-förmigem Querschnitt der Fall ist. In diesem Hohlraum kann das Endstück formschlüssig aufgenommen und gehalten sein, wodurch sich eine besonders stabile Befestigung des Endstücks an der Zierleiste ergibt.

In einer besonders vorteilhaften Ausführungsform kann das Endstück im eingeschobenen Zustand mit einer Fixierungsgeometrie an der Kraftfahrzeugkomponente abstützend bzw. haltend zusammenwirken. Hierdurch kann das Endstück die Zierleiste in die gewünschte Position beaufschlagen, also drücken oder ziehen.

In einer bevorzugten Ausführungsform kann die Abweichung des freien Endes der Zierleiste von der Soll-Position dadurch bestimmt werden, dass ein geeignetes Prüf-Endstück ausgewählt und an der Zierleiste und der Kraftfahrzeugkomponente probeweise angebracht wird. Das Prüf-Endstück, welches beispielsweise einen zusätzlichen Griffabschnitt für ein einfaches Greifen aufweisen kann, ermöglicht damit eine schnelle Bestimmung des notwendigen Versatzes des freien Endes der Zierleiste in die Soll-Position, so dass das passende Endstück besonders zeitsparend ermittelt werden kann.

Das weiteren wird eine Fensterführung, mii einer Haltevorrichtung für eine Zierleiste beansprucht, welche mindestens eine und/oder formschlüssige Abstützung des Endstücks und damit ein Beaufschlagen des Endes der Zierleiste in die Soll-Position.

Eine Fixierungsgeometrie ist als Längssteg insbesondere mit einem schwalbenschwanzförmigen Querschnitt zur formschlüssigen Aufnahme des Endstücks ausgebildet. Durch den schwalbenschwanzförmigen Querschnitt können sowohl Zug- als auch Druckkräfte quer zum Längssteg übertragen werden, so dass über das Endstück das freie Ende der Zierleiste in die Soll-Position zu der Fixierungsgeometrie hin gezogen oder von der Fixierungsgeometrie weggedrückt werden kann.

Die Fixierungsgeometrie kann vorteilhaft an der Fensterführung befestigt sein, beispielsweise formschlüssig verbunden oder stoffschlüssig geklebt oder angespritzt. Alternativ kann die Fixierungsgeometrie auch einstückig mit der Fensterführung ausgebildet sein, beispielsweise in einem gemeinsamen Spritzvorgang mit dem angrenzenden Teil der Fensterführung. Hierdurch kann das Endstück sicher gehalten werden und es kann auf eine Befestigung an der Fahrzeugkarosserie, beispielsweise durch Löcher in der Fensterführung und der Karosserie, verzichtet werden, was die Dichtwirkung beeinträchtigen würde.

Um die Zierleiste sicher und schnell an der Kraftfahrzeugkomponente befestigen zu können, kann die Haltevorrichtung für die Zierleiste als längliche Haltelippe ausgebildet sein. Hierbei kann besonders bevorzugt die mindestens eine Fixierungsgeometrie in Längsrichtung von der Haltelippe angeordnet sein. Weist die Fixierungsgeometrie beispielsweise eine längliche Form auf, kann die Fixierungsgeometrie in Längsrichtung parallel zur Längsrichtung der Haltelippe orientiert sein, was eine besonders einfache Montage des Endstücks an der Zierleiste und der Fixierungsgeometrie in Längsrichtung ermöglicht.

Vorteilhaft kann an der Haltevorrichtung eine Zierleiste befestigt sein und mindestens ein Endstück für die Zierleiste vorgesehen sein, welches sich an einem Ende der Zierleiste und an der Fixierungsgeometrie abstützt, wodurch das Ende der Zierleiste in die gewünschte Soll-Position beaufschlagbar ist.

Erfindungsgemäß weist das Endstück einen länglichen Aufnahmeabschnitt zum Einschub in ein Ende der Zierleiste auf, wobei in dem Aufnahmeabschnitt eine zu der Fixierungsgeometrie korrespondierende Haltegeometrie in Form einer Längsnut mit schwalbenschwanzförmigem Querschnitt vorgesehen ist. Über den Aufnahmeabschnitt kann sich daher das freie Ende der Zierleiste auf kürzestem Weg an der Fixierungsgeometrie abstützen, wodurch besonders günstige Kräfteverhältnisse erreicht werden.

Für einen optisch ansprechenden Übergang von der Zierleiste auf das Endstück kann das Endstück einen Kappenabschnitt aufweisen, welcher sich an den Aufnahmeabschnitt anschließt und dessen Außenkontur im Querschnitt der Außenkontur der Zierleiste entspricht. Hierdurch wird ein stufenloser Übergang zwischen dem Endstück und der Zierleiste ermöglicht.

Des Weiteren wird ein Endstück für eine Zierleiste der beschriebenen Kraftfahrzeugkomponente beansprucht. Das Endstück weist einen länglichen Aufnahmeabschnitt zum Einschub in ein Ende einer Zierleiste auf, wobei in dem Aufnahmeabschnitt eine Haltegeometrie, insbesondere eine Längsnut mit schwalbenschwanzförmigem Querschnitt, zur Abstützung des Endstücks gegenüber der Kraftfahrzeugkomponente vorgesehen ist.

Bevorzugt kann sich die Haltegeometrie parallel zum länglichen Aufnahmeabschnitt erstrecken, was eine besonders einfache Montage des Endstücks ermöglicht.

Um das Endstück gegenüber der Zierleiste und/oder der Kraftfahrzeugkomponente zu fixieren, können an dem Aufnahmeabschnitt seitlich nach außen vorstehende Rastelemente vorgesehen sein, welche zum haltenden Eingriff in korrespondierende Rastmulden in der Kraftfahrzeugkomponente ausgebildet sind. Alternativ oder zusätzlich können an dem Aufnahmeabschnitt auch Rastmulden vorgesehen sein, welche zur haltenden Aufnahme von Rastelementen an der Kraftfahrzeugkomponente ausgebildet sind.

Für einen stufenlosen Übergang zur Zierleiste kann sich an den Aufnahmeabschnitt ein Kappenabschnitt mit gegenüber dem Aufnahmeabschnitt vergrößerter Außenkontur anschließen. Der Kappenabschnitt bildet damit auch einen Anschlag, welche das Einschieben des Endstücks in die Zierleiste begrenzt.

Vorteilhaft kann sich an den Aufnahmeabschnitt oder den Kappenabschnitt ein insbesondere nach außen vorstehender Griffabschnitt anschließen, welcher ein einfaches Greifen des Endstücks ermöglicht. Auf diese Weise kann beispielsweise ein Prüf-Endstück ausgebildet sein, welches zur Bestimmung des notwendigen Versatzes zum Ausgleich der Abweichung verwendbar ist. Mit dem Griffabschnitt kann das Endstück einfach gegriffen und zur Prüfung mit der Zierleiste und der Kraftfahrzeugkomponente verbunden und auch wieder hiervon gelöst werden. Zusätzlich kann an dem Griffabschnitt auch eine Sollbruchstelle vorgesehen sein, welche ein einfaches Abtrennen des Griffabschnitts ermöglicht. Hierdurch kann das Endstück mit dem Griffabschnitt einfach montiert und nach der Montage der überstehende Griffabschnitt problemlos abgetrennt werden.

Weitere Besonderheiten und Vorzüge der Erfindung ergeben sich aus der folgenden Beschreibung bevorzugter Ausführungsbeispiele anhand der Zeichnungen. Es zeigen:
- Fig. 1: eine perspektivische Darstellung einer Fensterführung eines Kraftfahrzeugs;
- Fig. 2: eine Detailansicht auf die Fensterführung von Figur 1;
- Fig. 3: die Detailansicht von Figur 2 in einem ersten Montageschritt der Fensterführung;
- Fig. 4: die Detailansicht von Figur 2 in einem zweiten Montageschritt der Fensterführung;
- Fig. 5: eine Seitenansicht auf die Fensterführung von Figur 4;
- Fig. 6: die Detailansicht von Figur 2 in einem dritten Montageschritt der Fensterführung;
- Fig. 7: eine perspektivische Darstellung eines Endstücks der Fensterführung;
- Fig. 8: eine perspektivische Darstellung eines weiteren Endstücks der Fensterführung und
- Fig. 9: eine Seitenansicht auf ein Prüf-Endstück.

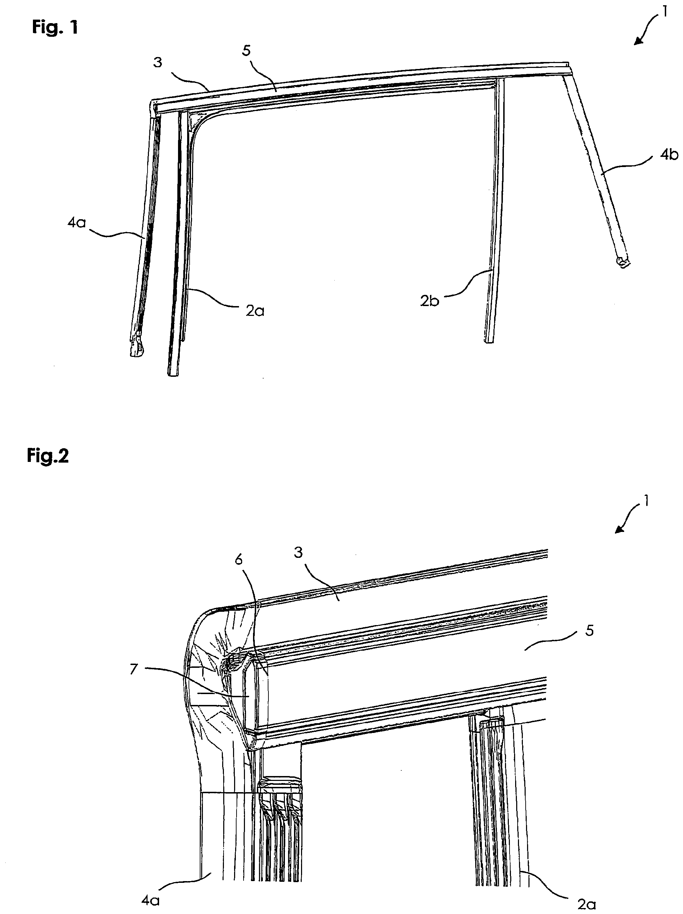

In Figur 1 ist eine perspektivische Darstellung einer Kraftfahrzeugkomponente in Form einer Fensterführung 1 gezeigt. Die Fensterführung 1 umfasst zwei seitliche Scheibenführungen 2a, 2b sowie eine die seitlichen Scheibenführungen 2a, 2b verbindende obere Scheibenführung 3. An der oberen Scheibenführung 3, welche seitlich über die seitlichen Scheibenführungen 2a, 2b vorsteht, sind weitere Dichtungsabschnitte 4a, 4b angeordnet. Die Scheibenführungen 2a, 2b, 3 bilden eine Führung und Abdichtung für eine verfahrbare Fensterscheibe. Mit den weiteren Dichtungsabschnitten 4a, 4b können Verkleidungselemente des Kraftfahrzeugs, wie beispielsweise Zierblenden, abgedichtet werden. Die gezeigte Fensterführung 1 wird insbesondere zur Abdichtung einer Seitentür eines Kraftfahrzeugs verwendet.

An der oberen Scheibenführung 3 ist eine Zierleiste 5 vorgesehen, welche sich im Wesentlichen parallel zur oberen Scheibenführung 3 erstreckt. Die Zierleiste 5 bildet ein Designelement des Kraftfahrzeugs und hebt die seitliche Linienführung hervor. Eine derartige Zierleiste kann beispielsweise in einer nicht gezeigten Ausführungsform auch an einem unteren Rand eines Fensters oder den seitlichen Scheibenführungen 2a, 2b bzw. an weiteren Kraftfahrzeugkomponenten angeordnet sein.

In Figur 2 ist eine Detailansicht auf die Fensterführung 1 von Figur 1 gezeigt. Wie dort zu entnehmen ist, ist an einem freien Ende 6 der Zierleiste 5 ein Endstück 7 angeordnet, welches die Zierleiste 5 seitlich bündig abschließt. In den nachfolgenden Figuren werden die Montageschritte für die Zierleiste 5 und das Endstück 7 beschrieben.

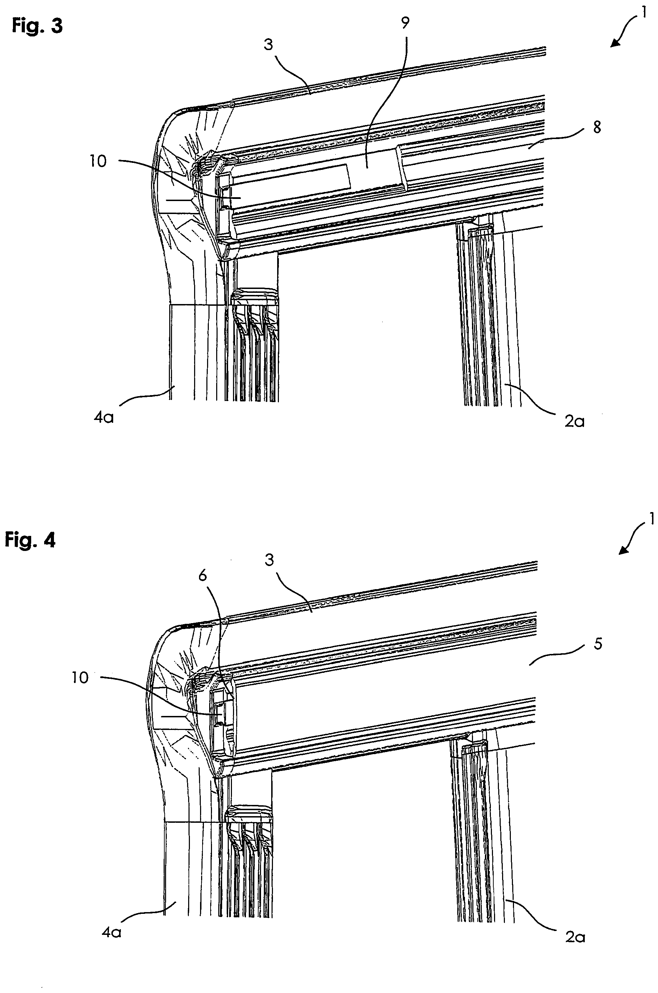

In Figur 3 ist die Detailansicht von Figur 2 in einem ersten Montageschritt gezeigt. Hierbei sind die Zierleiste 5 und das Endstück 7 noch nicht montiert und es sind die einzelnen Bestandteile der oberen Scheibenführung 3 erkennbar. Zur Halterung der Zierleiste 5 ist eine Haltevorrichtung 8 vorgesehen, welche sich in Längsrichtung der oberen Scheibenführung 3 erstreckt. In dem gezeigten Abschnitt der Fensterführung 1 schließt sich an die Haltevorrichtung 8 in Längsrichtung eine Aussparung 9 an, welche beispielsweise durch eine Ausstanzung aus der Haltevorrichtung 8 in diesem Bereich gebildet sein kann. In der Aussparung 9 ist eine Fixierungsgeometrie 10 für das Endstück 7 angeordnet. Die Fixierungsgeometrie 10 ist als Längssteg mit einem schwalbenschwanzförmigen Querschnitt zur formschlüssigen Aufnahme des Endstücks 7 ausgebildet und erstreckt sich parallel zur Haltevorrichtung 8. Die Fixierungsgeometrie 10 kann auf die Aussparung 9 aufgespritzt oder anderweitig form-oder stoffschlüssig befestigt sein. Beispielsweise kann die Fixierungsgeometrie als separates Bauteil auch seitlich in eine Nut in der oberen Scheibenführung 3 eingeschoben und dort formschlüssige gehalten sein. Zudem ist es auch möglich, die Fixierungsgeometrie einteilig mit der oberen Scheibenführung 3 in einem einzigen Herstellungsverfahren, insbesondere einem Spritzgussverfahren, herzustellen.

In Figur 4 ist die Detailansicht von Figur 2 in einem zweiten Montageschritt der Fensterführung 1 gezeigt. Hierbei ist die Zierleiste 5 an der oberen Scheibenführung 3 mittels der Haltevorrichtung 8 sicher befestigt. Die Zierleiste 5 ist derart positioniert, dass das freie Ende 6 der Zierleiste 5 die Fixierungsgeometrie 10 zumindest abschnittsweise verdeckt.

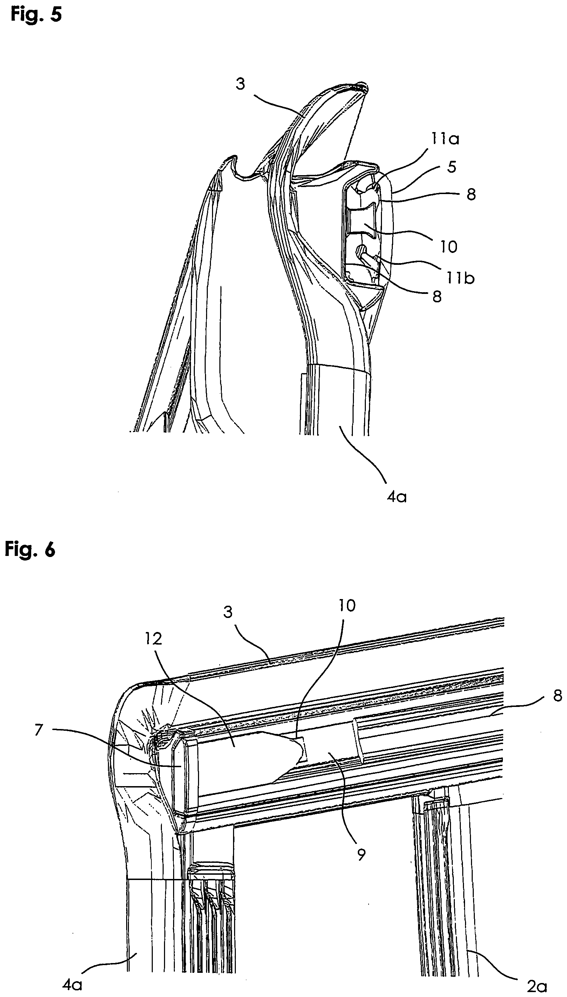

In Figur 5 ist eine Seitenansicht auf die Fensterführung 1 von Figur 4 gezeigt. Wie aus der Darstellung hervorgeht, weist die Zierleiste 5 einen C-förmigen Querschnitt auf und umgreift mit den freien Enden seitlich von der Haltevorrichtung 8 vorstehende Haltelippen 11a, 11b formschlüssig. Bei der Montage der Zierleiste 5 verformen sich die freien Enden und die Haltelippen 11a, 11b geringfügig, so dass die Zierleiste 5 mit geringem Druck einfach an die Haltevorrichtung 8 angeclipst werden kann.

Nach der Befestigung der Zierleiste 5 wird die Abweichung des freien Endes 6 der Zierleiste 5 von einer Soll-Position ermittelt. Die Soll-Position kann beispielsweise dadurch definiert sein, dass das freie Ende 6 der Zierleiste 5 mit einem gegenüberliegenden freien Ende einer benachbarten Zierleiste bündig angeordnet ist, so dass sich optisch ein stufenloser Übergang zwischen den Zierleisten ergibt. Hierzu kann es notwendig sein, dass das freie Ende 6 der Zierleiste 5 in der Zeichenebene von Figur 5 vertikal und/oder horizontal verschoben wird. In Abhängigkeit der ermittelten Abweichung kann folglich ein Endstück 7 mit dem entsprechenden Versatz ausgewählt werden, welches das freie Ende 6 der Zierleiste 5 derart versetzt/beaufschlagt, dass das freie Ende 6 in die Soll-Position gedrückt oder gezogen wird.

In Figur 6 ist die Detailansicht von Figur 2 in einem dritten Montageschritt der Fensterführung 1 gezeigt. Zur einfacheren Darstellung ist die an der Haltevorrichtung 8 angebrachte Zierleiste 5 nicht abgebildet. Zur Befestigung des Endstücks 7 wird dieses mit einem Aufnahmeabschnitt 12 in das freie Ende 6 der Zierleiste 5 eingeschoben, wobei das Endstück 7 gleichzeitig in Kontakt mit der Fixierungsgeometrie 10 kommt. Hierdurch kann sich das Endstück 7 an der Fixierungsgeometrie 10 abstützen und das freie Ende 6 der Zierleiste 5 in die Soll-Position beaufschlagen, d. h. in die Soll-Position drücken oder ziehen.

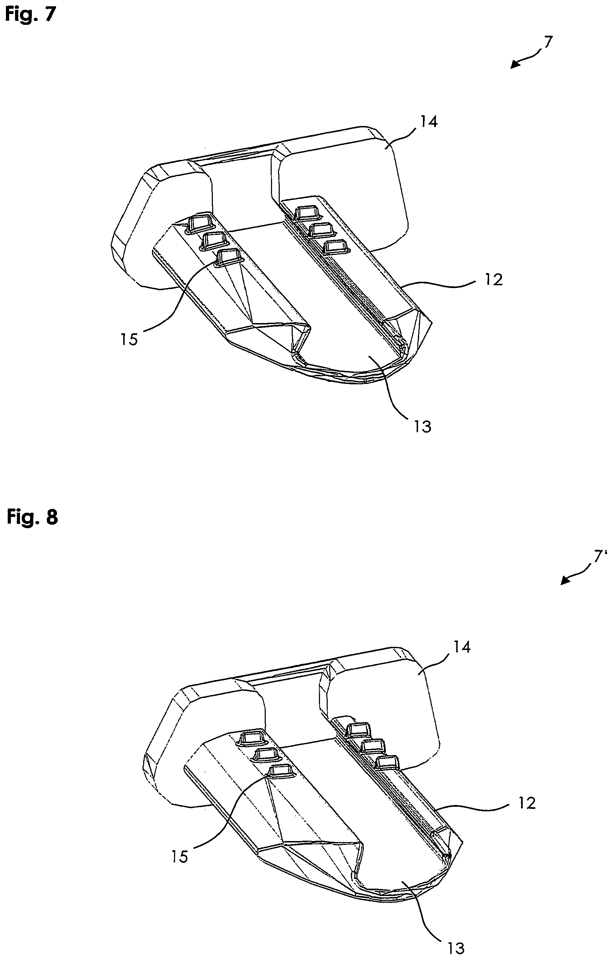

In Figur 7 ist eine perspektivische Darstellung des Endstücks 7 der Fensterführung 1 gezeigt. Wie aus der Figur 7 hervorgeht, weist der längliche Aufnahmeabschnitt 12 des Endstücks 7 eine zur Fixierungsgeometrie 10 korrespondierende Haltegeometrie 13 in Form einer Längsnut mit schwalbenschwanzförmigem Querschnitt auf. Angrenzend an den Aufnahmeabschnitt 12 ist ein Kappenabschnitt 14 vorgesehen, dessen Außenkontur im Querschnitt der Außenkontur der Zierleiste 5 entspricht.

Die in Form einer Längsnut ausgebildete Haltegeometrie 13 erstreckt sich in Längsrichtung des Aufnahmeabschnitts 12 und bei dem gezeigten Ausführungsbeispiel in den Kappenabschnitt 14, durchdringt diesen jedoch nicht. Hierdurch kann die Fixierungsgeometrie 10 zum Teil auch in dem Kappenabschnitt 14 aufgenommen werden, wobei der Kappenabschnitt 13 nach außen die Zierleiste 5 vollständig verschließt. Um die Befestigung des Endstücks 7 an der Fensterführung 1 bzw. der Fixierungsgeometrie 10 zu verstärken, sind an dem Aufnahmeabschnitt 12 seitlich nach außen vorstehende Rastelemente 15 vorgesehen. An der Fensterführung 1 bzw. der Fixierungsgeometrie 10 können korrespondierende Gegenelemente, wie beispielsweise Rastmulden, vorgesehen sein, so dass das Endstück 7 in der eingeschobenen Stellung formschlüssig arretiert ist.

Alternativ können die nach außen vorstehenden Rastelemente jedoch auch an der Fensterführung 1 bzw. der Fixierungsgeometrie 10 angeordnet sein und in korrespondierende Rastmulden an dem Endstück 7 eingreifen. In einer weiteren alternativen Ausführungsform können die Rastelemente oder die korrespondierenden Rastmulden auch in der Haltegeometrie 13 angeordnet sein. Für eine besonders stabile Arretierung des Endstücks 7 können die Rastelemente zudem hakenförmig ausgebildet sein, beispielsweise in Form eines Tannenbaum-Profils.

In Figur 8 ist eine perspektivische Darstellung eines weiteren Endstücks 7' der Fensterführung 1 gezeigt. Im Unterschied zum Endstück 7 ist bei dem Endstück 7' die Haltegeometrie 13 quer zur Längsrichtung des Aufnahmeabschnitts 12 versetzt ausgebildet. Gegenüber dem Endstück 7 weist das Endstück 7' damit einen Versatz auf, so dass das freie Ende 6 der Zierleiste 5 bei einer Verwendung des Endstücks 7' anstelle des Endstücks 7 um diesen Versatz seitlich beaufschlagt wird, also in Richtung des Versatzes gedrückt oder gezogen wird. Werden mehrere derartiger Endstücke 7, 7' mit unterschiedlichem Versatz der Haltegeometrie 13 zum Aufnahmeabschnitt 12 vorgehalten, kann je nach der Größe der ermittelten Abweichung ein Endstück mit dem passenden Versatz ausgewählt und damit das freie Ende 6 der Zierleiste 5 in die gewünschte Soll-Position gedrückt oder gezogen werden.

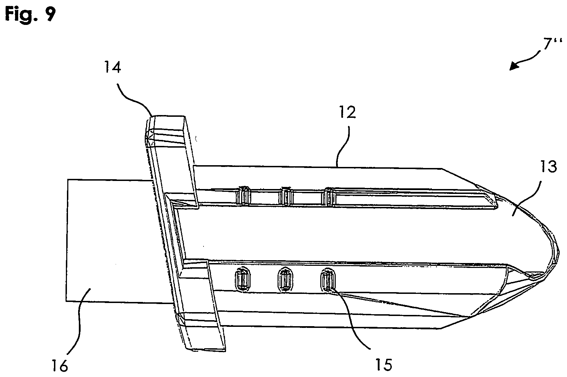

In Figur 9 ist eine Seitenansicht auf ein Prüf-Endstück 7" gezeigt. Im Gegensatz zu den Endstücken 7, 7' der vorhergehenden Figuren schließt sich hierbei an den Kappenabschnitt 14 ein Griffabschnitt 16 an, welcher ein einfaches Greifen des Endstücks 7" ermöglicht. Mit dem Prüf-Endstück 7" kann besonders schnell der notwendige Versatz zum Ausgleich der Abweichung ermittelt werden, da durch den Griffabschnitt 16 das Prüf-Endstück 7" einfach in das freie Ende 6 der Zierleiste 5 geschoben und nach Prüfung wieder herausgezogen werden kann. Um diesen Vorgang zusätzlich zu erleichtern, kann vorgesehen sein, dass an dem Prüf-Endstück 7" entgegen der Darstellung in Figur 9 keine Rastelemente 15 vorgesehen sind. Sobald durch Versuch mehrerer Prüf-Endstücke 7" mit unterschiedlichem Versatz der notwendige Versatz zum Ausgleich der Abweichung ermittelt ist, kann das Prüf-Endstück 7" entfernt und das finale Endstück 7, 7' montiert werden.

In einer alternativen Ausführungsform kann an dem Griffabschnitt 16 bevorzugt angrenzend an den Kappenabschnitt 14 eine Sollbruchstelle angeordnet sein, welche ein einfaches Abtrennen des Griffabschnitts 16 ermöglicht. Sobald das Endstück 7" mit dem passenden Versatz durch Versuch ermittelt ist, kann daher dieses in dem freien Ende 6 der Zierleiste 5 eingesteckt bleiben und es muss lediglich der Griffabschnitt 16 durch Abtrennen an der Sollbruchstelle gelöst werden. Hierdurch wird die Auswahl und Montage des passenden Endstücks zusätzlich vereinfacht und beschleunigt.

### Bezugszeichenliste:

- 1: Fensterführung
- 2a, 2b: Seitliche Scheibenführung
- 3: Obere Scheibenführung
- 4a, 4b: Weiterer Dichtungsabschnitt
- 5: Zierleiste
- 6: Freies Ende der Zierleiste
- 7, 7', 7": Endstück
- 8: Haltevorrichtung
- 9: Aussparung
- 10: Fixierungsgeometrie
- 11a, 11b: Haltelippe
- 12: Aufnahmeabschnitt
- 13: Haltegeometrie
- 14: Kappenabschnitt
- 15: Rastelement
- 16: Griffabschnitt

## Patentansprüche

1. Verfahren zur Positionierung einer Zierleiste (5) an einer Kraftfahrzeugkomponente (1), insbesondere an einer Fensterführung eines Kraftfahrzeugs, umfassend die Schritte:
- Befestigen der Zierleiste (5) an der Kraftfahrzeugkomponente (1),
- Anbringen eines Endstücks (7; 7'; 7") an der Kraftfahrzeugkomponente (1) und dem freien Ende (6) der Zierleiste (5), so dass das Endstück (7; 7'; 7")das freie Ende (6) der Zierleiste (5) in eine Soll-Position beaufschlagt,
wobei nach der Befestigung der Zierleiste (5) und vor der Anbringung des Endstücks (7; 7'; 7") die Abweichung mindestens eines freien Endes (6) der Zierleiste (5) von einer Soll-Position bestimmt und das Endstück (7; 7'; 7") mit einem Versatz gemäß der ermittelten Abweichung ausgewählt wird.

2. Verfahren nach Anspruch 1,
**dadurch gekennzeichnet,**
**dass** das Endstück (7; 7'; 7") zur Befestigung an der Zierleiste (5) in das freie Ende (6) eingeschoben wird.

3. Verfahren nach Anspruch 2,
**dadurch gekennzeichnet,**
**dass** das Endstück (7; 7'; 7") im eingeschobenen Zustand mit einer Fixierungsgeometrie (10) an der Kraftfahrzeugkomponente (1) abstützend bzw. haltend zusammenwirkt.

4. Verfahren nach einem der Ansprüche 1 bis 3,
**dadurch gekennzeichnet,**
**dass** die Abweichung von der Soll-Position bestimmt wird, indem ein geeignetes Prüf-Endstück (7") ausgewählt und an der Zierleiste (5) und der Kraftfahrzeugkomponente (1) probeweise angebracht wird.

5. Fensterführung (1) mit einer Haltevorrichtung (8) für eine Zierleiste (5) umfassend mindestens einer Fixierungsgeometrie (10) für ein an der Zierleiste (5) befestigbares Endstück (7; 7'; 7")
wobei die Fixierungsgeometrie (10) als Längssteg zur formschlüssigen Aufnahme des Endstücks (7; 7'; 7") der Zierleiste (5) ausgebildet ist.

6. Fensterführung (1) nach Anspruch 5,
**dadurch gekennzeichnet,**
**dass** die Fixierungsgeometrie (10) als Längssteg mit einem schwalbenschwanzförmigen Querschnitt zur formschlüssigen Aufnahme des Endstücks (7; 7'; 7") der Zierleiste (5) ausgebildet ist.

7. Fensterführung (1) Anspruch 5 oder 6,
**dadurch gekennzeichnet,**
**dass** die Haltevorrichtung (8) für die Zierleiste (5) als längliche Haltelippe (11a; 11b) ausgebildet und die mindestens eine Fixierungsgeometrie (10) in Längsrichtung von der Haltelippe (11a; 11b) angeordnet ist.

8. Fensterführung (1) nach einem der Ansprüche 5 bis 7,
**dadurch gekennzeichnet,**
**dass** an der Haltevorrichtung (8) eine Zierleiste (5) befestigt ist und mindestens ein Endstück (7; 7'; 7") für die Zierleiste (5) vorgesehen ist, welches sich an einem Ende (6) der Zierleiste (5) und an der Fixierungsgeometrie (10) abstützt.

9. Fensterführung (1) nach Anspruch 8,
**dadurch gekennzeichnet,**
**dass** das Endstück (7; 7'; 7") einen länglichen Aufnahmeabschnitt (12) zum Einschub in ein Ende (6) der Zierleiste (5) aufweist, wobei in dem Aufnahmeabschnitt (12) eine zu der Fixierungsgeometrie (10) korrespondierende Haltegeometrie (13), insbesondere eine Längsnut mit schwalbenschwanzförmigem Querschnitt, vorgesehen ist.

10. Fensterführung (1) nach Anspruch 8 oder 9,
**dadurch gekennzeichnet,**
**dass** das Endstück (7; 7'; 7") einen Kappenabschnitt (14) aufweist, dessen Außenkontur im Querschnitt der Außenkontur der Zierleiste (5) entspricht.

11. Endstück (7; 7'; 7") für eine Zierleiste (5) einer Fensterführung (1) nach einem der Ansprüche 5 bis 10,
mit einem länglichen Aufnahmeabschnitt (12) zum Einschub in ein Ende (6) einer Zierleiste (5), wobei in dem Aufnahmeabschnitt (12) eine Haltegeometrie (13) in Form einer Längsnut zur Abstützung des Endstücks (7; 7'; 7") gegenüber der Fensterführung (1) vorgesehen ist **dadurch gekennzeichnet,**
**dass** die Längsnut einen schwalbenschwanzförmigem Querschnitt aufweist.

12. Endstück (7; 7'; 7") nach Anspruch 11,
**dadurch gekennzeichnet,**
**dass** sich die Haltegeometrie (13) parallel zum länglichen Aufnahmeabschnitt (12) erstreckt.

13. Endstück (7; 7'; 7") nach Anspruch 11 oder 12,
**dadurch gekennzeichnet,**
**dass** der Aufnahmeabschnitt (12) seitlich nach außen vorstehende Rastelemente (15) aufweist.

14. Endstück (7; 7'; 7") nach einem der Ansprüche 11 bis 13,
**dadurch gekennzeichnet,**
**dass** sich an den Aufnahmeabschnitt (12) ein Kappenabschnitt (14) mit gegenüber dem Aufnahmeabschnitt (12) vergrößerter Außenkontur anschließt.

15. Endstück (7; 7'; 7") nach einem der Ansprüche 11 bis 14,
**dadurch gekennzeichnet,**
**dass** sich an den Aufnahmeabschnitt (12) oder den Kappenabschnitt (14) ein Griffabschnitt (16) anschließt, welcher gegebenenfalls an einer Sollbruchstelle einfach abtrennbar ist.

## Claims

1. Method for positioning a moulding (5) on a motor vehicle component (1), in particular on a window guide of a motor vehicle, comprising the steps:
- fastening the moulding (5) to the motor vehicle component (1),
- attaching an end piece (7; 7'; 7") to the motor vehicle component (1) and the free end (6) of the moulding (5) so that the end piece (7; 7'; 7") impinges the free end (6) of the moulding (5) into a target position,
wherein after fastening the moulding (5) and before attaching the end piece (7; 7'; 7"), the deviation of at least one free end (6) of the moulding (5) from a target position is determined, and the end piece (7; 7'; 7") having an offset according to the deviation determined is selected.

2. Method according to Claim 1,
**characterized in that**
the end piece (7; 7'; 7") is inserted into the free end (6) for fastening to the moulding (5).

3. Method according to Claim 2,
**characterized in that**
the end piece (7; 7'; 7") in the inserted state interacts in a supporting or retaining manner with a fixing geometry (10) on the motor vehicle component (1).

4. Method according to one of Claims 1 to 3,
**characterized in that**
the deviation from the target position is determined by selecting a suitable test end piece (7") and attaching the latter to the moulding (5) and the motor vehicle component (1) as a test.

5. Window guide (1) having a holding device (8) for a moulding (5) comprising at least one fixing geometry (10) for an end piece (7; 7'; 7") that can be fastened to the moulding (5),
wherein the fixing geometry (10) is formed as a longitudinal web for receiving the end piece (7; 7'; 7") of the moulding (5) in a form-fitting manner.

6. Window guide (1) according to Claim 5,
**characterized in that**
the fixing geometry (10) is formed as a longitudinal web with a dovetail-shaped cross section for receiving the end piece (7; 7'; 7") of the moulding (5) in a form-fitting manner.

7. Window guide (1) according to Claim 5 or 6,
**characterized in that**
the holding device (8) for the moulding (5) is formed as an elongated holding lip (11a; 11b), and the at least one fixing geometry (10) is disposed in the longitudinal direction of the holding lip (11a; 11b).

8. Window guide (1) according to one of Claims 5 to 7,
**characterized in that**
a moulding (5) is fastened to the holding device (8) and provided for the moulding (5) is at least one end piece (7; 7'; 7") which is supported at one end (6) of the moulding (5) and on the fixing geometry (10).

9. Window guide (1) according to Claim 8,
**characterized in that**
the end piece (7; 7'; 7") has an elongate receptacle portion (12) for insertion into an end (6) of the moulding (5), wherein a holding geometry (13), in particular a longitudinal groove having a dovetail-shaped cross section, corresponding to the fixing geometry (10) is provided in the receptacle portion (12).

10. Window guide (1) according to Claim 8 or 9,
**characterized in that**
the end piece (7; 7'; 7") has a cap portion (14), the external contour of the latter corresponding to the external contour of the moulding (5) in cross section.

11. End piece (7; 7'; 7") for a moulding (5) of a window guide (1) according to one of Claims 5 to 10,
having an elongate receptacle portion (12) for insertion into one end (6) of a moulding (5), wherein provided in the receptacle portion (12) is a holding geometry (13) in the form of a longitudinal groove for supporting the end piece (7; 7'; 7") relative to the window guide (1),
**characterized in that**
the longitudinal groove has a dovetail-shaped cross section.

12. End piece (7; 7'; 7") according to Claim 11,
**characterized in that**
the holding geometry (13) extends parallel to the elongate receptacle portion (12).

13. End piece (7; 7'; 7") according to Claim 11 or 12,
**characterized in that**
the receptacle portion (12) has latching elements (15) that protrude laterally outwards.

14. End piece (7; 7'; 7") according to one of Claims 11 to 13,
**characterized in that**
a cap portion (14) having an enlarged external contour in comparison to the receptacle portion (12) is connected to the receptacle portion (12).

15. End piece (7; 7'; 7") according to one of Claims 11 to 14,
**characterized in that**
a handle portion (16) which can be easily separated at a predetermined breaking point, if necessary, adjoins the receptacle portion (12) or the cap portion (14).

## Revendications

1. Procédé de positionnement d'une baguette enjoliveuse (5) sur un composant (1) d'un véhicule automobile, en particulier sur une coulisse guide-vitre d'un véhicule automobile,
comprenant les étapes consistant à :
- fixer la baguette enjoliveuse (5) sur le composant (1) du véhicule automobile,
- monter un embout (7 ; 7' ; 7") sur le composant (1) du véhicule automobile et sur l'extrémité libre (6) de la baguette enjoliveuse (5), de manière à ce que l'embout (7 ; 7' ; 7") sollicite l'extrémité libre (6) de la baguette enjoliveuse (5) vers une position de consigne,
dans lequel, après avoir fixé la baguette enjoliveuse (5) et avant de monter l'embout (7 ; 7' ; 7"), on détermine l'écart d'au moins une extrémité libre (6) de la baguette enjoliveuse (5) par rapport à une position de consigne, et on choisit l'embout (7 ; 7' ; 7") avec un décalage en fonction de l'écart déterminé.

2. Procédé selon la revendication 1,
**caractérisé en ce que**
on insère l'embout (7 ; 7' ; 7") dans l'extrémité libre (6) pour le fixer sur la baguette enjoliveuse (5).

3. Procédé selon la revendication 2,
**caractérisé en ce que**
l'embout (7 ; 7' ; 7"), à l'état inséré, coopère avec une géométrie de fixation (10) sur le composant (1) du véhicule automobile, de manière à la supporter ou retenir.

4. Procédé selon l'une des revendications 1 à 3,
**caractérisé en ce que**
on détermine l'écart par rapport à la position de consigne en sélectionnant un embout d'essai (7") approprié et en le plaçant à titre d'essai sur la baguette enjoliveuse (5) et sur le composant (1) du véhicule automobile.

5. Coulisse guide-vitre (1) comprenant un dispositif de retenue (8) pour une baguette enjoliveuse (5), présentant au moins une géométrie de fixation (10) pour un embout (7 ; 7' ; 7") apte à être fixé à la baguette enjoliveuse (5),
dans laquelle la géométrie de fixation (10) est conçue comme une entretoise longitudinale pour recevoir par complémentarité de forme l'embout (7 ; 7' ; 7") de la baguette enjoliveuse (5).

6. Coulisse guide-vitre (1) selon la revendication 5,
**caractérisée en ce que**
la géométrie de fixation (10) est conçue comme une entretoise longitudinale avec une section transversale en forme de queue d'aronde pour recevoir par complémentarité de forme l'embout (7 ; 7' ; 7") de la baguette enjoliveuse (5).

7. Coulisse guide-vitre (1) selon la revendication 5 ou 6,
**caractérisée en ce que**
le dispositif de retenue (8) pour la baguette enjoliveuse (5) est conçu comme une lèvre de retenue allongée (11a ; 11b), et ladite au moins une géométrie de fixation (10) est disposée dans la direction longitudinale de la lèvre de retenue (11a ; 11b).

8. Coulisse guide-vitre (1) selon l'une des revendications 5 à 7,
**caractérisée en ce que**
une baguette enjoliveuse (5) est fixée au dispositif de retenue (8), et il est prévu au moins un embout (7 ; 7' ; 7") pour la baguette enjoliveuse (5), qui s'appuie sur une extrémité (6) de la baguette enjoliveuse (5) et sur la géométrie de fixation (10).

9. Coulisse guide-vitre (1) selon la revendication 8,
**caractérisée en ce que**
l'embout (7 ; 7' ; 7") présente une portion de réception allongée (12) destinée à être insérée dans une extrémité (6) de la baguette enjoliveuse (5), sachant que dans la portion de réception (12) est prévue une géométrie de retenue (13), en particulier une rainure longitudinale avec une section transversale en queue d'aronde, qui correspond à la géométrie de fixation (10).

10. Coulisse guide-vitre (1) selon la revendication 8 ou 9,
**caractérisée en ce que**
l'embout (7 ; 7' ; 7") présente une portion de capuchon (14) dont le contour extérieur correspond, en section transversale, au contour extérieur de la baguette enjoliveuse (5).

11. Embout (7 ; 7' ; 7") pour une baguette enjoliveuse (5) d'une coulisse guide-vitre (1) selon l'une des revendications 5 à 10,
comprenant une portion de réception allongée (12) destinée à être insérée dans une extrémité (6) d'une baguette enjoliveuse (5), sachant que dans la portion de réception (12) est prévue une géométrie de retenue (13) sous la forme d'une rainure longitudinale pour supporter l'embout (7 ; 7' ; 7") par rapport à la coulisse guide-vitre (1),
**caractérisé en ce que**
la rainure longitudinale présente une section transversale en queue d'aronde.

12. Embout (7 ; 7' ; 7") selon la revendication 11,
**caractérisé en ce que**
la géométrie de retenue (13) s'étend parallèlement à la portion de réception allongée (12).

13. Embout (7 ; 7' ; 7") selon la revendication 11 ou 12,
**caractérisé en ce que**
la portion de réception (12) présente des éléments d'encliquetage (15) faisant saillie latéralement vers l'extérieur.

14. Embout (7 ; 7' ; 7") selon l'une des revendications 11 à 13,
**caractérisé en ce que**
une portion de capuchon (14) dont le contour extérieur est agrandi par rapport à la portion de réception (12) se raccorde à la portion de réception (12).

15. Embout (7 ; 7' ; 7") selon l'une des revendications 11 à 14,
**caractérisé en ce que**
une portion de préhension (16) se raccorde à la portion de réception (12) ou à la portion de capuchon (14), qui, le cas échéant, peut être facilement coupée au niveau d'un point destiné à la rupture.
